(19) **Europäisches Patentamt**
**European Patent Office**
**Office européen des brevets**

(11) **EP 4 161 218 B1**

(12) **EUROPEAN PATENT SPECIFICATION**

(45) Date of publication and mention
of the grant of the patent:
**05.11.2025  Bulletin 2025/45**

(21) Application number: **21200098.8**

(22) Date of filing: **30.09.2021**

(51) International Patent Classification (IPC):
***H05B 47/18*** (2020.01)

(52) Cooperative Patent Classification (CPC):
**H05B 47/1995; H05B 47/183; H05B 47/199;**
**Y02B 20/40**

(54) **AUTOMATIC LOCALIZATION OF BUS COMMUNICATION PARTICIPANTS OF A LIGHTING CONTROL BUS**

AUTOMATISCHE LOKALISIERUNG VON BUS-KOMMUNIKATIONSTEILNEHMERN EINES BELEUCHTUNGSSTEUERUNGSBUSSES

LOCALISATION AUTOMATIQUE DE PARTICIPANTS DE COMMUNICATION DE BUS DE COMMANDE D'ÉCLAIRAGE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(43) Date of publication of application:
**05.04.2023  Bulletin 2023/14**

(73) Proprietor: **Tridonic GmbH & Co. KG**
**6851 Dornbirn (AT)**

(72) Inventors:
• **Künzli, Markus**
**6850 Dornbirn (AT)**
• **Coulibaly, Youssouf**
**6850 Dornbirn (AT)**
• **Horn, Frank**
**6850 Dornbirn (AT)**

• **Kistler, Roger**
**6850 Dornbirn (AT)**
• **Kuch, Thomas**
**6850 Dornbirn (AT)**
• **Pereira, Eduardo**
**6850 Dornbirn (AT)**
• **Schlumpf, Hans**
**6850 Dornbirn (AT)**

(74) Representative: **Rupp, Christian**
**Mitscherlich PartmbB**
**Patent- und Rechtsanwälte**
**Karlstraße 7**
**80333 München (DE)**

(56) References cited:
**GB-A- 2 512 149      US-A1- 2004 002 792**
**US-B1- 11 019 708**

## Description

### Technical Field

The present disclosure generally relates to lighting technology, and in particular to a method for automatic localization of bus communication participants of a lighting control bus, a bus communication participant and a lighting management entity configured to execute the method, and a luminaire comprising a bus communication participant.

### Background Art

A lighting system typically comprises light sources (integrated into luminaires) and control devices, which allow the lighting to behave according to rules, external inputs and user preferences. The light sources and control devices are normally connected by a control system comprising a lighting control bus, such as a digital addressable lighting interface (DALI) bus, and an attached lighting management entity (LME).

In a DALI-based control system, the LME assigns abstract "addresses" to every device, which are random, and do not provide any clue on the device's absolute position or its position relative to other devices.

Yet for a useful illumination it is necessary that the LME is aware of the positions/locations of the luminaires and other control devices, such as ambient light sensors or switches for user interaction. The procedure of learning the physical position or location of the devices is called "localization", and is normally done by a trained service technician during the setup of the lighting system, called "commissioning".

Devices such as LED control gear may reveal their position/location by modulating a light output of the hosting luminaire in response to a DALI identify command sent by the LME to the address of the given device. Devices may also be capable of activating a signaling unit, such as a buzzer or an indicator light in the hosting luminaire in response to the DALI identify command sent by the LME. Furthermore, devices may also announce their triggering to the LME, if they are sensitive to a certain external action, such as an infrared remote input, or a motion sensor. Individual and unambiguous triggering by the commissioner can be used to localize the device in the installation.

US 2004/002792 A1 discloses a lighting system for controlling the operation of a plurality of lighting fixtures in a building in order to minimize energy consumption.

These known solutions are unsatisfactory, as

- localization of devices requires the commissioner to pay attention,
- triggering devices for localization requires an activity by the commissioner,
- devices without any outside access cannot be localized by giving feedback or detecting remote stimuli.

### Summary

In view of the above-mentioned drawbacks and limitations, the present disclosure aims to improve the background art by automatic localization of a number of $N$ bus communication participants of a lighting control bus.

The objective is achieved by the embodiments as defined by the appended independent claims. Preferred embodiments are set forth in the dependent claims and in the following description and drawings.

A first aspect of the present disclosure relates to a method for automatic localization of a number of $N$ bus communication participants of a lighting control bus. The method further comprises determining, for each of the number of $N$ bus communication participants and for at least $N$ different states of power transfer on the lighting control bus, respective planned electrical parameters on the lighting control bus in accordance with an electrical layout plan of the lighting control bus. The method further comprises establishing the at least $N$ different states of power transfer on the lighting control bus. The method further comprises detecting, by each of the number of $N$ bus communication participants in each of the at least $N$ different established states of power transfer on the lighting control bus, a respective observed electrical parameter on the lighting control bus. The method further comprises matching, for each of the at least $N$ different established states of power transfer on the lighting control bus, the respective planned electrical parameters on the lighting control bus with the respective observed electrical parameters on the lighting control bus.

The method may further comprise detecting, by each of the number of $N$ bus communication participants, a respective idle electrical parameter on the lighting control bus.

The determining of the respective planned electrical parameters on the lighting control bus in accordance with the electrical layout plan of the lighting control bus may comprise setting up a system of linear circuit equations in accordance with the electrical layout plan of the lighting control bus; applying the system of linear circuit equations to each of the at least $N$ different states of power transfer on the lighting control bus; and solving the respective applied system of linear circuit equations for the respective planned electrical parameters on the lighting control bus.

The setting up the system of linear circuit equations in accordance with the electrical layout plan of the lighting control bus may comprise applying Kirchhoff's circuit laws to the electrical layout plan of the lighting control bus; and the solving the respective applied system of linear circuit equations for the respective planned electrical parameters on the lighting control bus may comprise applying Gaussian elimination or an equivalent method of linear algebra to the system of linear equations.

The establishing the at least $N$ different states of power transfer on the lighting control bus may comprise short-circuiting, in each of the at least $N$ different established states of power transfer on the lighting control bus, the lighting control bus by a different one of the N bus communication participants.

The short-circuiting of the lighting control bus by the different one of the N bus communication participants may comprise sending a message prompting the different one of the N bus communication participants to respond, the response to the message resulting in the short-circuiting of the lighting control bus.

The establishing the at least $N$ different states of power transfer on the lighting control bus may comprise feeding, in each of the at least $N$ different established states of power transfer on the lighting control bus, the lighting control bus by a different one of a number of $M$ bus power supplies.

The feeding of the lighting control bus by the different one of the number of $M$ bus power supplies may comprise sending a message prompting the different one of the number of $M$ bus power supplies to feed the lighting control bus.

The detecting the respective observed electrical parameter on the lighting control bus may comprise measuring the respective electrical parameter on the lighting control bus across a non-current carrying switch of the respective bus communication participant; and sending the respective observed electrical parameter on the lighting control bus minus the respective idle electrical parameter on the lighting control bus to a lighting management entity of the lighting control bus.

The measuring the respective electrical parameter on the lighting control bus across the non-current carrying switch of the respective bus communication participant may comprise measuring the respective electrical parameter on the lighting control bus in response to receiving the message prompting the different one of the number of $M$ bus power supplies or the message prompting the different one of the number of $N$ bus communication participants.

The matching the respective planned electrical parameters on the lighting control bus with the respective observed electrical parameters on the lighting control bus may comprise, in each of the established states of power transfer: receiving the respective observed electrical parameters on the lighting control bus from one or more of the number of $N$ bus communication participants; sorting the respective observed electrical parameters in descending order; sorting, for each of the at least $N$ different states of power transfer on the lighting control bus, the respective planned electrical parameters in descending order; and determining a best fit of the sorted observed electrical parameters to the sorted planned electrical parameters of the at least $N$ different states of power transfer on the lighting control bus in accordance with a minimization of a residual.

The determining the best fit of the sorted observed electrical parameters to the sorted planned electrical parameters of the at least $N$ different states of power transfer on the lighting control bus in accordance with a minimization of a residual may comprise applying a method of least squares or an equivalent method of regression analysis. The residual may comprise a difference between the sorted observed electrical parameters and the sorted planned electrical parameters of the respective state of power transfer on the lighting control bus.

The lighting control bus may comprise a DALI bus.

A second aspect of the present disclosure relates to a lighting system according to claim 12.

The processor may further be configured to detect a respective idle electrical parameter on the lighting control bus.

### Advantageous Effects

The present disclosure provides automatic localization of a number of $N$ bus communication participants of a lighting control bus by matching electrical parameters observed on the lighting control bus in different states thereof with electrical parameters expected on the lighting control bus in the respective state. This avoids the necessity of having a trained service technician on-site during the commissioning of the lighting system.

Likewise, the provided methodology is applicable for early detection of variations/degradations of electrical parameters of the lighting control bus, such as by increased contact resistances.

The technical effects and advantages described in relation with the method equally apply to the lighting management entity, the bus communication participant, and the luminaire having corresponding features.

### Brief Description of Drawings

The above-described aspects and implementations will now be explained with reference to the accompanying drawings, in which the same or similar reference numerals designate the same or similar elements.

The features of these aspects and implementations may be combined with each other unless specifically stated otherwise.

The drawings are to be regarded as being schematic representations, and elements illustrated in the drawings are not necessarily shown to scale. Rather, the various elements are represented such that their function and general purpose become apparent to those skilled in the art.

FIG. 1 illustrates an exemplary lighting system comprising a lighting control bus 5, a number of $M=1$ bus power supplies 3, $S_m$, and a number of $N=7$ luminaires 7;

FIG. 2 illustrates an exemplary electrical circuit/network of the lighting control bus 5;

FIGs. 3, 4 illustrate a further exemplary topology of the lighting control bus 5;

FIG. 5 illustrates an exemplary DALI interface of a bus communication participant 2 in more detail; and

FIG. 6 illustrates a method 1 for automatic localization of a number of $N$ bus communication participants 2 of a lighting control bus 5.

**Detailed Descriptions of Drawings**

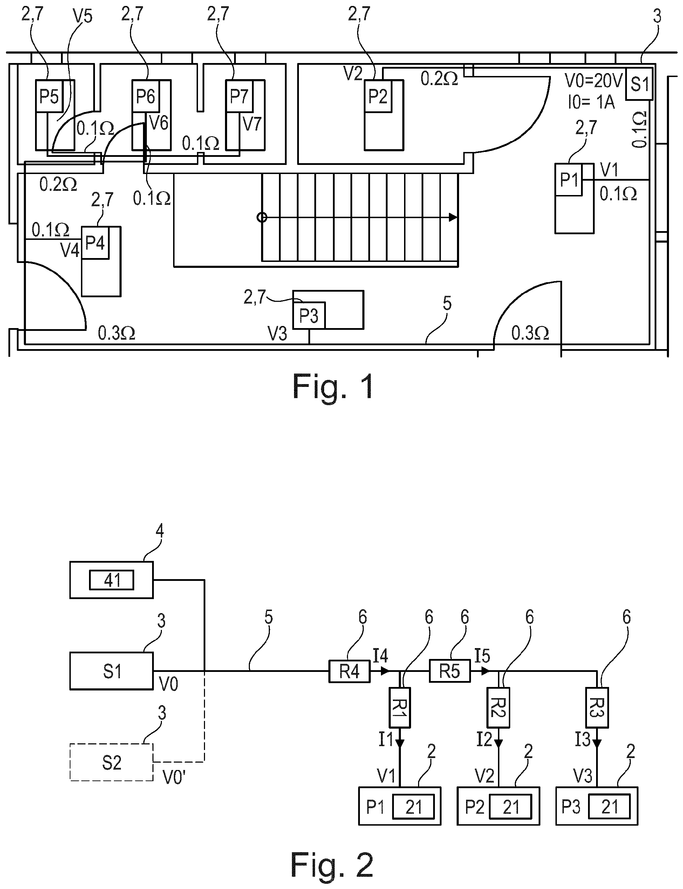

FIG. 1 illustrates an exemplary lighting system comprising a lighting control bus 5, a number *of $M=1$* bus power supplies 3, $S_1$, and a number of $N=7$ luminaires 7.
Each luminaire 7 comprises a bus communication participant 2, $P_1...P_7$ which will be explained in more detail in connection with FIG. 2 below.
As used herein, a lighting control bus may refer to a field bus configured to control a lighting system interconnected by the same.
The lighting control bus 5 may comprise a DALI bus.
As used herein, a bus power supply may refer to a power supply configured to supply a lighting control bus with electrical power.
As used herein, a bus communication participant may refer to a device that is connectable to a lighting control bus and may perform communication via the lighting control bus, if connected to the same.
The bus power supply 3, $S_1$ and the luminaires 7 are arranged/positioned/located in accordance with a building layout plan and interconnected by the lighting control bus 5, such as a DALI bus, in accordance with an electrical layout plan of the lighting control bus 5, which specifies the electrical circuit/network of the lighting control bus 5 and the related electrical properties.
Quite specifically, the bus power supply 3, $S_1$ arranged to the upper right of FIG. 1 is in this example configured to supply the lighting control bus 5 with a voltage of $V_0 = 20V$ and a maximum current of $I_0 = 1A$, and sections of the lighting control bus 5 are associated with respective electrical resistances $R_i$ having roughly length-dependent resistance values. Furthermore, it may be taken from the electrical layout plan that each of the bus communication participants 2, $P_n$ is configured to detect a respective electrical parameter $V_n$ on the lighting control bus 5 if instructed accordingly.
As used herein, an electrical parameter may particularly refer to a voltage.
Those skilled in the art will appreciate that the electrical circuit/network of a lighting control bus 5 usually has a topology in which one or more pairs of wire lead away from the feeding bus power supply 3, $S_1$ to the remote bus communication participants 2, $P_1...P_7$, as may also be seen in FIG. 2 which is discussed next.
FIG. 2 illustrates an exemplary electrical circuit/network of the lighting control bus 5, which is simplified in that it comprises only a number of $N=3$ bus communication participants 2, $P_n$ of the lighting control bus 5 for reasons of clarity.
The electrical circuit/network comprises one bus power supply 3, $S_1$ and may optionally comprise more of the same, as is suggested by the dotted representation of bus power supply 3, $S_2$.
The electrical circuit/network further comprises electrical resistances $R_i$ associated with respective sections of the lighting control bus 5, which are depicted as lumped electrical resistances $R_i$ for the purpose of illustration.
The electrical circuit/network further comprises a lighting management entity (LME) 4 of the lighting control bus 5.
The LME 4 and the respective bus communication participant 2 comprises a respective processor 41, 21.
The respective bus communication participant 2 (i.e., its processor 21) may be configured to detect 11 a respective idle electrical parameter $V_{n,0}$ on the lighting control bus 5. Alternatively, the respective idle electrical parameter $V_{n,0}$ may be neglected, i.e., set to a zero value.
The LME 4 (i.e., its processor 41) is configured to determine 12, for each of the number of $N$ bus communication participants and for at least $N$ different states $S$ of power transfer on the lighting control bus 5, respective planned electrical parameters $V_{n,p}$-$V_{n,0}$ on the lighting control bus.
The LME 4 and the respective bus communication participant 2 are further configured to establish 13 at least $N$ different states of power transfer on the lighting control bus 5.

As used herein, a "state" or "state of power transfer" may refer to a configuration of the lighting control bus 5 wherein only a single one of the number of $M$ bus power supplies 3, $S_m$ supplies power to the lighting control bus 5 and only a single one of the number of $N$ bus communication participants 2, $P_n$ dissipates power from the lighting control bus 5, for example as a result of performing communication via the lighting control bus 5.

The respective bus communication participant 2 is further configured to detect 14, in each of the at least $N$ different established states of power transfer on the lighting control bus 5, a respective observed electrical parameter $V_n$-$V_{n,0}$ on the lighting control bus 5.

The LME 4 is further configured to match 15, for each of the at least $N$ different established states of power transfer on the lighting control bus 5, the respective planned electrical parameters $V_{n,p}$-$V_{n,0}$ on the lighting control bus 5 with the respective observed electrical parameters $V_n$-$V_{n,0}$ on the lighting control bus 5.

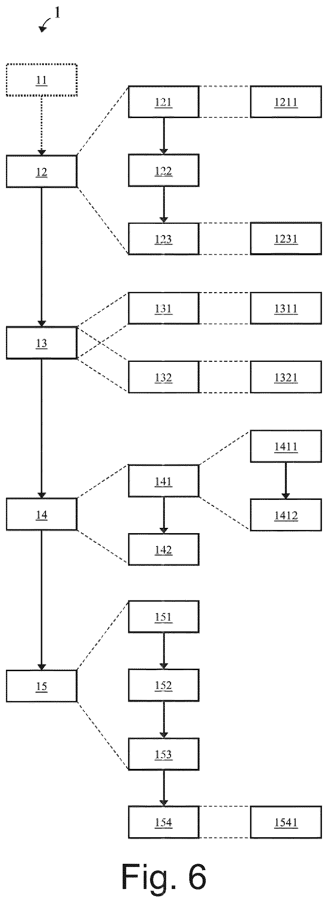

Collectively, the LME 4 and the respective bus communication participant 2 resp. their processors 41, 21 may be configured to perform a method for automatic localization of the number of $N$ bus communication participants 2 of the lighting control bus 5, which will be explained in more detail in connection with FIG. 6 below.

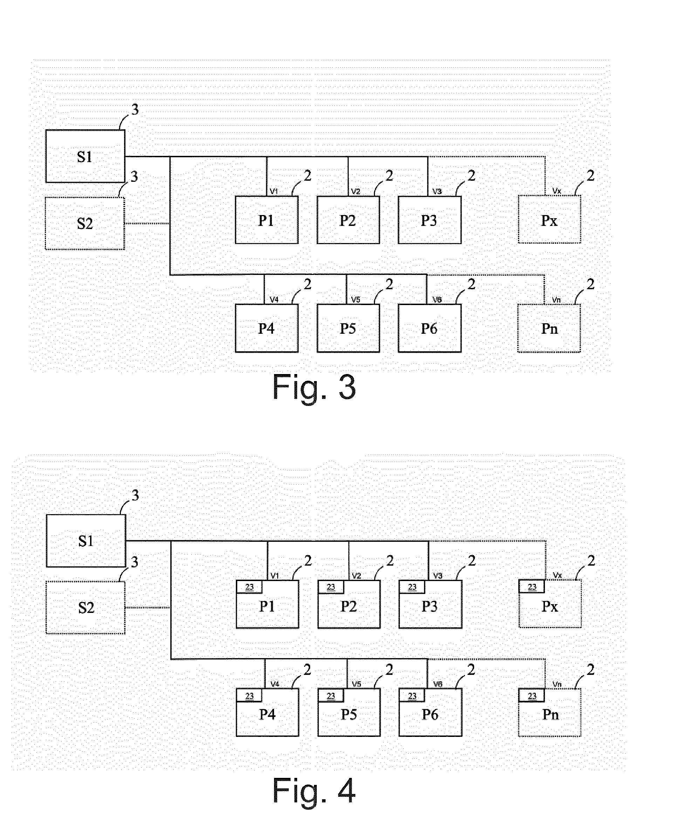

FIGs. 3, 4 illustrate a further exemplary topology of the lighting control bus 5. The topology includes one or more feeding bus power supplies 3, $S_1$, $S_2$, wherein the second bus power supply 3, $S_2$ is indicated by dotted lines. A number of linear networks (i.e., pairs of wire) leads away from the feeding bus power supplies 3, $S_1$, $S_2$ to a number of remote bus communication participants 2, $P_1...P_x$, $P_4...P_n$. Respective processors 41, 21 of the bus power supplies 3 and the bus communication participants 2 are omitted, as well as the electrical resistances $R_i$ associated with respective sections of the lighting control bus 5. FIG. 4 additionally indicates that each of the bus communication participants 2 comprises a respective switch 23 for transmission via the DALI bus and thereby giving rise to the afore-mentioned "states of power transfer".

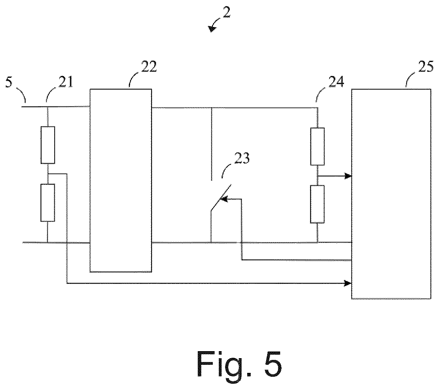

FIG. 5 illustrates an exemplary DALI interface of a bus communication participant 2 in more detail.

The DALI interface comprises an electrical parameter divider element 21 for direct electrical parameter measurement on the DALI bus, a protection and rectifier element 22, the afore-mentioned switch 23 for transmission via the DALI bus, a further electrical parameter divider 24 for reception via the DALI bus, and a signal processing and insulation circuit 25.

FIG. 6 illustrates a method 1 for automatic localization of a number of $N$ bus communication participants 2 of a lighting control bus 5.

A most concise implementation of the method 1 comprises steps 11 - 15, as shown to the left of FIG. 6.

Initially, the method 1 may comprise a step of detecting 11, by each of the number of $N$ bus communication participants 2, a respective idle electrical parameter $V_{n,0}$ on the lighting control bus 5. The respective idle electrical parameter $V_{n,0}$ may serve as a reference for any electrical parameter variations. The detecting 11 may be achieved using the electrical parameter divider element 21 of the respective bus communication participant 2 shown in FIG. 2.

The method 1 further comprises a step of determining 12, for each of the number of $N$ bus communication participants and for at least $N$ different states of power transfer on the lighting control bus 5, respective planned electrical parameters $V_{n,p}$-$V_{n,0}$ on the lighting control bus 5 in accordance with an electrical layout plan of the lighting control bus 5

The determining 12 of the respective planned electrical parameters $V_{n,p}$-$V_{n,0}$ on the lighting control bus 5 in accordance with the electrical layout plan of the lighting control bus 5 may comprise setting up 121 a system of linear circuit equations in accordance with the electrical layout plan of the lighting control bus 5, which may further comprise applying 1211 Kirchhoff's circuit laws to the electrical layout plan of the lighting control bus 5.

In the exemplary electrical circuit/network of FIG. 2, applying 1211 Kirchhoff's circuit laws to the electrical layout plan of the lighting control bus 5 yields the following system of linear circuit equations (1) - (5):

Kirchhoff's current law:

$$I4 - I1 - I5 = 0 \qquad\qquad (1)$$

$$I5 - I2 - I3 = 0 \qquad\qquad (2)$$

Kirchhoff's electrical parameter law:

$$-V0 + R4 \cdot I4 + R1 \cdot I1 + V1 = 0$$

$$\Rightarrow \quad R4 \cdot I4 + R1 \cdot I1 = V0 - V1 \tag{3}$$

$$-V0 + R4 \cdot I4 + R5 \cdot I5 + R2 \cdot I2 + V2 = 0$$

$$\Rightarrow \quad R4 \cdot I4 + R5 \cdot I5 + R2 \cdot I2 = V0 - V2 \tag{4}$$

$$-V0 + R4 \cdot I4 + R5 \cdot I5 + R3 \cdot I3 + V3 = 0$$

$$\Rightarrow \quad R4 \cdot I4 + R5 \cdot I5 + R3 \cdot I3 = V0 - V3 \tag{5}$$

The determining 12 may further comprise applying 122 the system of linear circuit equations to each of the at least *N* different states of power transfer on the lighting control bus 5.

In the exemplary electrical circuit/network of FIG. 2, the number *of M=1* bus power supplies 3 and the number *of N=3* bus communication participants 2 define a total *of M·N = 1·3 =* 3 different states of power transfer on the lighting control bus 5. Without loss of generality, these states are denoted as 100, 010, and 001 in binary notation. Applying 122 the system of linear circuit equations (1) - (5) to each of the at least *N=3* different states of power transfer on the lighting control bus 5 yields:

State 100 {P1 = 1/dissipating; P2 = 0/detecting; P3 = 0/detecting}:

$$\Rightarrow \quad V1_{100} = 0, \ I2 = I3 = 0$$

$$I4 = I1 \tag{1}$$

$$I5 = 0 \tag{2}$$

$$(R4 + R1) \cdot I1 = V0 \tag{3}$$

$$R4 \cdot I1 = V0 - V2_{100} \tag{4}$$

$$R4 \cdot I1 = V0 - V3_{100} \tag{5}$$

State 010 {P1 = 0/detecting; P2 = 1/dissipating; P3 = 0/detecting}:

$$\Rightarrow \quad V2_{010} = 0, \ I1 = I3 = 0$$

$$I4 = I5 = I2 \tag{1}, (2)$$

$$R4 \cdot I2 = V0 - V1_{010} \tag{3}$$

$$(R4 + R5 + R2) \cdot I2 = V0 \tag{4}$$

$$(R4 + R5) \cdot I2 = V0 - V3_{010} \tag{5}$$

State 001 {P1 = 0/detecting; P2 = 0/ detecting; P3 = 1/dissipating}:

$$\Rightarrow \quad V3_{001} = 0, \; I1 = I2 = 0$$

$$I4 = I5 = I3 \quad\quad\quad\quad (1), (2)$$

$$R4 \cdot I3 = V0 - V1_{001} \quad\quad\quad\quad (3)$$

$$(R4 + R5) \cdot I3 = V0 - V2_{001} \quad\quad\quad\quad (4)$$

$$(R4 + R5 + R3) \cdot I3 = V0 \qu\quad\quad\quad (5)$$

As can be seen, each of the different states {100; 010; 001} of power transfer on the lighting control bus 5 involves a current flow from the (single) bus power supply 3 to the respective (single) bus communication participant 2 via respective electrical resistances $R_i$ of intervening sections of the lighting control bus 5. In other words, for each of the different states of power transfer on the lighting control bus 5, the underlying electrical circuit/network simplifies to a linear network between the single bus power supply 3 and the single bus communication participant 2.

The determining 12 may further comprise solving 123 the respective applied system of linear circuit equations for the respective planned electrical parameters $V_{n,p}$-$V_{n,0}$ on the lighting control bus 5, which may further comprise applying 1231 Gaussian elimination or an equivalent method of linear algebra to the system of linear equations.

In the exemplary electrical circuit/network of FIG. 2, the respective planned electrical parameters $V_{n,p}$ (without regard to the corresponding idle electrical parameter $V_{n,0}$, which may be derived from state 000) on the lighting control bus 5 are derived as follows:

State 100 {P1 = 1/dissipating; P2 = 0/detecting; P3 = 0/detecting}:

$$\Rightarrow \quad I1 = \frac{V0}{R4+R1} = \frac{V0-V2_{100}}{R4} = \frac{V0-V3_{100}}{R4}$$

$$\Rightarrow \quad V1_{100} = 0$$

$$\Rightarrow \quad V2_{100} = V0 \frac{R1}{R1+R4}$$

$$\Rightarrow \quad V3_{100} = V0 \frac{R1}{R1+R4}$$

State 010 {P1 = 0/detecting; P2 = 1/dissipating; P3 = 0/detecting}:

$$\Rightarrow \quad I2 = \frac{V0}{R4+R5+R2} = \frac{V0-V3_{010}}{R4+R5} = \frac{V0-V1_{010}}{R4}$$

$$\Rightarrow \quad V1_{010} = V0 \frac{R5+R2}{R4+R5+R2}$$

$$\Rightarrow \quad V2_{010} = 0$$

$$\Rightarrow \quad V3_{010} = V0 \frac{R2}{R4+R5+R2}$$

State 001 {P1 = 0/detecting; P2 = 0/detecting; P3 = 1/dissipating}:

$$\Rightarrow \quad I3 = \frac{V0}{R4+R5+R3} = \frac{V0-V2_{001}}{R4+R5} = \frac{V0-V1_{001}}{R4}$$

$$\Rightarrow \qquad V1_{001} = V0\,\frac{R5+R3}{R4+R5+R3}$$

$$\Rightarrow \qquad V2_{001} = V0\,\frac{R3}{R4+R5+R3}$$

$$\Rightarrow \qquad V3_{001} = 0$$

As can be seen, the unknown electrical parameters $V_{n,p}$ to be observed by (or expected at) the bus communication participants 2 may be derived on the basis of the known electrical parameter $V_0$ supplied by the bus power supply 3 and the known electrical resistances $R_i$, wherein the unknown currents $I_i$ are eliminated.

In other words, the step of determining 12 provides the respective *planned* electrical parameters on the lighting control bus 5 in accordance with the electrical layout plan of the lighting control bus 5, against which respective *observed* electrical parameters on the lighting control bus 5 may be matched in order to identify the involved bus communication participants 2.

The method 1 further comprises a step of establishing 13 the at least $N$ different states of power transfer on the lighting control bus 5.

The establishing 13 of the at least $N$ different states of power transfer on the lighting control bus 5 may comprise short-circuiting 131, in each of the at least $N$ different established states of power transfer on the lighting control bus 5, the lighting control bus 5 by a different one of the N bus communication participants 2, which may further comprise sending 1311 a message prompting the different one of the N bus communication participants 2 to respond, the response to the message resulting in the short-circuiting 131 of the lighting control bus 5. In particular, short-circuiting 131 of the lighting control bus 5 may be achieved using the switch 23 for transmission via the DALI bus of the respective bus communication participant 2 shown in FIG. 2.

The establishing 13 may alternatively or additionally comprise feeding 132, in each of the at least $N$ different established states of power transfer on the lighting control bus 5, the lighting control bus 5 by a different one of a number of $M$ bus power supplies 3, which may further comprise sending 1321 a message prompting the different one of the number of $M$ bus power supplies 3 to feed the lighting control bus 5.

In other words, the step of establishing 13 puts the different states of power transfer on the lighting control bus 5 for which the system of linear circuit equations has been evaluated in practice on a one-by-one basis. That is to say, each of the different states of power transfer on the lighting control bus 5 involves a particular one of the number of $M$ bus power supplies 3 and a particular one of the number of $N$ bus communication participants 2, thereby simplifying the underlying electrical circuit/network to a respective linear network (cf. above). While only a number of $M=1$ bus power supplies 3 are necessary, a number of $M>1$ bus power supplies 3 may yield an overdetermined system of linear circuit equations which may improve an accuracy of the method 1.

The method 1 further comprises a step of detecting 14, by each of the number of $N$ bus communication participants in each of the at least $N$ different established states of power transfer on the lighting control bus 5, a respective observed electrical parameter $V_n$-$V_{n,0}$ on the lighting control bus 5. The detecting 14 the respective observed electrical parameter $V_n$-$V_{n,0}$ on the lighting control bus 5 may comprise measuring 141 the respective electrical parameter $V_n$ on the lighting control bus 5 across a non-current carrying switch 23 (see FIG. 2) of the respective bus communication participant 2, which may further comprise measuring 1412 the respective electrical parameter $V_n$ on the lighting control bus 5 in response to receiving 1411 the message prompting the different one of the number of $M$ bus power supplies 3 or the message prompting the different one of the number of $N$ bus communication participants 2.

The detecting 14 may further comprise sending 142 the respective observed electrical parameter $V_n$ on the lighting control bus 5 minus the respective idle electrical parameter $V_{n,0}$ on the lighting control bus 5 to a lighting management entity 4 of the lighting control bus 5.

In other words, the step of detecting 14 provides the respective electrical parameter $V_n$-$V_{n,0}$ observed by each of the number of $N$ bus communication participants on the lighting control bus 5 in each of the at least $N$ different established states of power transfer on the lighting control bus 5.

The method 1 further comprises a step of matching 15, for each of the at least $N$ different established states of power transfer on the lighting control bus 5, the respective planned electrical parameters $V_{n,p}$-$V_{n,0}$ on the lighting control bus 5 with the respective observed electrical parameters $V_n$-$V_{n,0}$ on the lighting control bus 5.

The matching 15 of the respective planned electrical parameters $V_{n,p}$-$V_{n,0}$ on the lighting control bus 5 with the respective observed electrical parameters $V_n$-$V_{n,0}$ on the lighting control bus 5 may comprise, in each of the established states of power transfer: receiving 151 the respective observed electrical parameters $V_n$-$V_{n,0}$ on the lighting control bus 5 from one or more of the number of $N$ bus communication participants 2.

The matching 15 may further comprise, in each of the established states of power transfer: sorting 152 the respective observed electrical parameters $V_n$-$V_{n,0}$ in a descending (or ascending) order. The result may be a list of the respective observed electrical parameters $V_n$-$V_{n,0}$ (including their respective bus communication participants 2).

The matching 15 may further comprise: sorting 153, for each of the at least N different states of power transfer on the lighting control bus 5, the respective planned electrical parameters $V_{n,p}$-$V_{n,0}$ in the descending (or ascending) order. The result may be a list of lists of the respective planned electrical parameters $V_{n,p}$-$V_{n,0}$ (including their respective bus communication participants 2 in accordance with the electrical layout plan of the lighting control bus 5, because the electrical circuit/network of a lighting control bus 5 usually has a topology in which one *or more* pairs of wire (i.e., linear networks) lead away from the feeding bus power supply 3, $S_1$ to the remote bus communication participants 2, $P_1...P_7$ (see FIGs. 1, 2). For each of the one or more linear networks, a list of the sorted planned electrical parameters $V_{n,p}$-$V_{n,0}$ is obtained, resulting in a list of lists, for example, but other data structures are possible, too. The one *or more* lists of the sorted planned electrical parameters $V_{n,p}$-$V_{n,0}$ are needed since it is unknown *a priori* which one of the bus communication participants 2 captured in the electrical layout plan of the lighting control bus 5 will respond by short-circuiting 131 the lighting control bus 5, when instructed to do so.

The matching 15 may further comprise, in each of the established states of power transfer: determining 154 a best fit of the sorted observed electrical parameters $V_n$-$V_{n,0}$ to the sorted planned electrical parameters $V_{n,p}$-$V_{n,0}$ of the at least N different states of power transfer on the lighting control bus 5 in accordance with a minimization of a residual, which may further comprise applying 1541 a method of least squares or an equivalent method of regression analysis, methods of machine learning, or analytic methods. The residual may comprise a difference between the sorted observed electrical parameters $V_n$-$V_{n,0}$ and the sorted planned electrical parameters $V_{n,p}$-$V_{n,0}$ of the respective state of power transfer on the lighting control bus 5.

As a result, a particular one of the lists of the sorted planned electrical parameters $V_{n,p}$-$V_{n,0}$ is identified as the best fit for the list of sorted observed electrical parameters $V_n$-$V_{n,0}$, whose respective (detecting) bus communication participants 2 may be associated with the respective (planned) bus communication participants 2 in accordance with the electrical layout plan of the lighting control bus 5.

While the above method 1 focuses on matching of planned and observed electrical parameters, a similar method may be based on matching of planned and observed electrical resistances $R_i$ (or ratios thereof).

For example, the following resistance ratios may be derived in the exemplary electrical circuit/network of FIG. 2:

State 100 {P1 = 1/dissipating; P2 = 0/detecting; P3 = 0/detecting}:

$$\Rightarrow \quad I1 = \frac{V0}{R4+R1} = \frac{V0-V2_{100}}{R4} = \frac{V0-V3_{100}}{R4}$$

$$\Rightarrow \quad R4/R1 = (V0 - V2_{100})/V2_{100} = (V0 - V3_{100})/V3_{100}$$

State 010 {P1 = 0/detecting; P2 = 1/dissipating; P3 = 0/detecting}:

$$\Rightarrow \quad I2 = \frac{V0}{R4+R5+R2} = \frac{V0-V3_{010}}{R4+R5} = \frac{V0-V1_{010}}{R4}$$

$$\Rightarrow \quad R4/R5/R2 = (V0 - V1_{010})/(V1_{010} - V3_{010})/V3_{010}$$

State 001 {P1 = 0/detecting; P2 = 0/detecting; P3 = 1/dissipating}:

$$\Rightarrow \quad I3 = \frac{V0}{R4+R5+R3} = \frac{V0-V2_{001}}{R4+R5} = \frac{V0-V1_{001}}{R4}$$

$$\Rightarrow \quad R4/R5/R3 = (V0 - V1_{001})/(V1_{001} - V2_{001})/V2_{001}$$

**Claims**

1.  A method (1) for automatic localization of a number of N bus communication participants (2) of a lighting control bus (5), comprising

    - determining (12), for each of the number of N bus communication participants and for at least N different states of power transfer on the lighting control bus (5), respective planned electrical parameters $(V_{n,p}-V_{n,0})$ on the lighting control bus (5) in accordance with an electrical layout plan of the lighting control bus (5);

- establishing (13) the at least N different states of power transfer on the lighting control bus (5) by short-circuiting (131), in each of the at least N different established states of power transfer on the lighting control bus (5), the lighting control bus (5) by a different one of the N bus communication participants (2);

- detecting (14), by each of the number of N bus communication participants in each of the at least N different established states of power transfer on the lighting control bus (5), a respective observed electrical parameter $(V_n-V_{n,0})$ on the lighting control bus (5); and

- matching (15), for each of the at least N different established states of power transfer on the lighting control bus (5), the respective planned electrical parameters $(V_{n,p}-V_{n,0})$ on the lighting control bus (5) with the respective observed electrical parameters $(V_n-V_{n,0})$ on the lighting control bus (5).

2. The method (1) of claim 1,
   the determining (12) of the respective planned electrical parameters $(V_{n,p}-V_{n,0})$ on the lighting control bus (5) in accordance with the electrical layout plan of the lighting control bus (5) comprising

   - setting up (121) a system of linear circuit equations in accordance with the electrical layout plan of the lighting control bus (5);
   - applying (122) the system of linear circuit equations to each of the at least N different states of power transfer on the lighting control bus (5); and
   - solving (123) the respective applied system of linear circuit equations for the respective planned electrical parameters $(V_{n,p}-V_{n,0})$ on the lighting control bus (5).

3. The method (1) of claim 2,

   the setting up (121) the system of linear circuit equations in accordance with the electrical layout plan of the lighting control bus (5) comprising

   - applying (1211) Kirchhoff's circuit laws to the electrical layout plan of the lighting control bus (5); and

   the solving (123) the respective applied system of linear circuit equations for the respective planned electrical parameters $(V_{n,p})$ on the lighting control bus (5) comprising

   - applying (1231) Gaussian elimination or an equivalent method of linear algebra to the system of linear equations.

4. The method (1) of any one of the claims 1 to 3,
   the short-circuiting (131) of the lighting control bus (5) by the different one of the N bus communication participants (2) comprising

   - sending (1311) a message prompting the different one of the N bus communication participants (2) to respond, the response to the message resulting in the short-circuiting of the lighting control bus (5).

5. The method (1) of any one of the claims 1 to 4,
   the establishing (13) the at least N different states of power transfer on the lighting control bus (5) comprising

   - feeding (132), in each of the at least N different established states of power transfer on the lighting control bus (5), the lighting control bus (5) by a different one of a number of M bus power supplies (3).

6. The method (1) of claim 5,
   the feeding (132) of the lighting control bus (5) by the different one of the number of M bus power supplies (3) comprising

   - sending (1321) a message prompting the different one of the number of M bus power supplies (3) to feed the lighting control bus (5).

7. The method (1) of any one of the claims 1 to 6,
   the detecting (14) the respective observed electrical parameter $(V_n-V_{n,0})$ on the lighting control bus (5) comprising

- measuring (141) the respective electrical parameter ($V_n$) on the lighting control bus (5) across a non-current carrying switch (23) of the respective bus communication participant (2); and
- sending (142) the respective observed electrical parameter ($V_n$) on the lighting control bus (5) minus a respective idle electrical parameter ($V_{n,0}$) on the lighting control bus (5) to a lighting management entity (4) of the lighting control bus (5).

**8.** The method (1) of claim 7,
the measuring (141) the respective electrical parameter ($V_n$) on the lighting control bus (5) across the non-current carrying switch (23) of the respective bus communication participant (2) comprising

- measuring (1412) the respective electrical parameter ($V_n$) on the lighting control bus (5) in response to receiving (1411) the message prompting the different one of the number of M bus power supplies (3) or the message prompting the different one of the number of N bus communication participants (2).

**9.** The method (1) of any one of the claims 1 to 8,
the matching (15) the respective planned electrical parameters ($V_{n,p}$-$V_{n,0}$) on the lighting control bus (5) with the respective observed electrical parameters ($V_n$-$V_{n,0}$) on the lighting control bus (5) comprising

- in each of the established states of power transfer,

- receiving (151) the respective observed electrical parameters ($V_n$-$V_{n,0}$) on the lighting control bus (5) from one or more of the number of N bus communication participants (2);
- sorting (152) the respective observed electrical parameters ($V_n$-$V_{n,0}$) in descending order;
- sorting (153), for each of the at least N different states of power transfer on the lighting control bus (5), the respective planned electrical parameters ($V_{n,p}$-$V_{n,0}$) in descending order; and
- determining (154) a best fit of the sorted observed electrical parameters ($V_n$-$V_{n,0}$) to the sorted planned electrical parameters ($V_{n,p}$-$V_{n,0}$) of the at least N different states of power transfer on the lighting control bus (5) in accordance with a minimization of a residual.

**10.** The method (1) of claim 9,
the determining (154) the best fit of the sorted observed electrical parameters ($V_n$-$V_{n,0}$) to the sorted planned electrical parameters ($V_{n,p}$-$V_{n,0}$) of the at least N different states of power transfer on the lighting control bus (5) in accordance with a minimization of a residual comprising

- applying (1541) a method of least squares or an equivalent method of regression analysis, the residual comprising a difference between the sorted observed electrical parameters ($V_n$-$V_{n,0}$) and the sorted planned electrical parameters ($V_{n,p}$-$V_{n,0}$) of the respective state of power transfer on the lighting control bus (5).

**11.** The method (1) of any one of the claims 1 to 10,
the lighting control bus (5) comprising a DALI bus.

**12.** A lighting system comprising a lighting control bus (5), a number of N bus communication participants, and a lighting management entity (4) comprising a processor, the processor is configured to

- determine (12), for each of a number of N bus communication participants and for at least N different states of power transfer on the lighting control bus (5), respective planned electrical parameters ($V_{n,p}$-$V_{n,0}$) on the lighting control bus (5) in accordance with an electrical layout plan of the lighting control bus (5);
- establish (13) the at least N different states of power transfer on the lighting control bus (5) by short-circuiting (131), in each of the at least N different established states of power transfer on the lighting control bus (5), the lighting control bus (5) by a different one of the N bus communication participants (2); and
each of the number of N bus communication participants is configured to detect in each of the at least N different established states of power transfer on the lighting control bus, a respective observed electrical parameter ($V_n$-$V_{n,0}$) on the lighting control bus; and
the processor is further configured to:

- match (15), for each of the at least N different established states of power transfer on the lighting control bus (5), the respective planned electrical parameters ($V_{n,p}$-$V_{n,0}$) on the lighting control bus (5) with the detected respective observed electrical parameters ($V_n$-$V_{n,0}$) on the lighting control bus (5).

**Patentansprüche**

1. Verfahren (1) zum automatischen Lokalisieren einer Anzahl von N Buskommunikationsteilnehmern (2) eines Beleuchtungssteuerungsbusses (5), umfassend

   - Bestimmen (12) für jeden der Anzahl von N Buskommunikationsteilnehmern und für mindestens N unterschiedliche Leistungsübertragungszustände auf dem Beleuchtungssteuerungsbus (5) jeweils geplanter elektrischer Parameter ($V_{n,p}$-$V_{n,0}$) auf dem Beleuchtungssteuerungsbus (5) gemäß einem elektrischen Auslegungsplan des Beleuchtungssteuerungsbusses (5);
   - Herstellen (13) der mindestens N unterschiedlichen Leistungsübertragungszustände auf dem Beleuchtungssteuerungsbus (5) durch Kurzschließen (131) in jedem der mindestens N unterschiedlichen hergestellten Leistungsübertragungszustände auf dem Beleuchtungssteuerungsbus (5), wobei der Beleuchtungssteuerungsbus (5) ein unterschiedlicher zu den N Buskommunikationsteilnehmern (2) ist;
   - Erfassen (14), durch jeden der Anzahl von N Buskommunikationsteilnehmern in jedem der mindestens N unterschiedlichen hergestellten Leistungsübertragungszustände auf dem Beleuchtungssteuerungsbus (5), eines jeweiligen beobachteten elektrischen Parameters ($V_n$-$V_{n,0}$) auf dem Beleuchtungssteuerungsbus (5); und
   - Abgleichen (15), für jeden der mindestens N unterschiedlichen hergestellten Leistungsübertragungszustände auf dem Beleuchtungssteuerungsbus (5), der jeweiligen geplanten elektrischen Parameter ($V_{n,p}$-$V_{n,0}$) auf dem Beleuchtungssteuerungsbus (5) mit den jeweils beobachteten elektrischen Parametern ($V_n$-$V_{n,0}$) auf dem Beleuchtungssteuerungsbus (5).

2. Verfahren (1) nach Anspruch 1,
   die Bestimmung (12) der jeweils geplanten elektrischen Parameter ($V_{n,p}$-$V_{n,0}$) auf dem Beleuchtungssteuerbus (5) gemäß dem elektrischen Auslegungsplan des Beleuchtungssteuerbusses (5), umfassend

   - Einrichten (121) eines Systems linearer Schaltungsgleichungen gemäß dem elektrischen Auslegungsplan des Beleuchtungssteuerbusses (5);
   - Anwenden (122) des Systems linearer Schaltungsgleichungen auf jeden der mindestens N unterschiedlichen Leistungsübertragungszustände auf dem Beleuchtungssteuerungsbus (5); und
   - Auflösen (123) des jeweils angewendeten Systems linearer Schaltungsgleichungen für die jeweils geplanten elektrischen Parameter ($V_{n,p}$-$V_{n,0}$) auf dem Beleuchtungssteuerungsbus (5).

3. Verfahren (1) nach Anspruch 2,

   das Einrichten (121) des Systems linearer Schaltungsgleichungen gemäß dem elektrischen Auslegungsplan des Beleuchtungssteuerbusses (5), umfassend

   - Anwenden (1211) der Kirchhoffschen Schaltungsgesetze auf den elektrischen Auslegungsplan des Beleuchtungssteuerbusses (5); und

   das Auflösen (123) des jeweils angewendeten Systems linearer Schaltungsgleichungen für die jeweils geplanten elektrischen Parameter ($V_{n,p}$) auf dem Beleuchtungssteuerungsbus (5) umfassend

   - Anwenden (1231) der Gauß-Elimination oder eines äquivalenten Verfahrens von linearer Algebra auf das System linearer Schaltungsgleichungen.

4. Verfahren (1) nach einem der Ansprüche 1 bis 3,
   das Kurzschließen (131) des Beleuchtungssteuerungsbusses (5) durch den unterschiedlichen zu den N Buskommunikationsteilnehmern (2) umfassend

   - Senden (1311) einer Nachricht, die den unterschiedlichen zu den N Buskommunikationsteilnehmern (2) auffordert zu antworten, wobei die Antwort auf die Nachricht in dem Kurzschließen des Beleuchtungssteuerbusses (5) resultiert.

5. Verfahren (1) nach einem der Ansprüche 1 bis 4,
   das Bestimmen (13) der mindestens N unterschiedlichen Leistungsübertragungszustände auf dem Beleuchtungssteuerungsbus (5) umfassend

- Speisen (132), in jedem der mindestens N unterschiedlichen hergestellten Leistungsübertragungszustände auf dem Beleuchtungssteuerungsbus (5), des Beleuchtungssteuerungsbusses (5) durch einen unterschiedlichen einer Anzahl von M Busleistungsversorgungen (3).

6. Verfahren (1) nach Anspruch 5,
die Speisung (132) des Beleuchtungssteuerbusses (5) durch die unterschiedliche der Anzahl von M Busleistungsversorgungen (3) umfassend

   - Senden (1321) einer Nachricht, die die unterschiedliche der Anzahl von M Busleistungsversorgungen (3) auffordert, den Beleuchtungssteuerungsbus (5) zu speisen.

7. Verfahren (1) nach einem der Ansprüche 1 bis 6,
das Erfassen (14) des jeweiligen beobachteten elektrischen Parameters ($V_n$-$V_{n,0}$) auf dem Beleuchtungssteuerungsbus (5) umfassend

   - Messen (141) des jeweiligen elektrischen Parameters ($V_n$) auf dem Beleuchtungssteuerungsbus (5) über einen nicht stromführenden Schalter (23) des jeweiligen Buskommunikationsteilnehmers (2); und
   - Senden (142) des jeweiligen beobachteten elektrischen Parameters ($V_n$) auf dem Beleuchtungssteuerbus (5) abzüglich eines jeweiligen elektrischen Leerlaufparameters ($V_{n,0}$) auf dem Beleuchtungssteuerungsbus (5) an eine Beleuchtungsverwaltungseinheit (4) des Beleuchtungssteuerungsbusses (5).

8. Verfahren (1) nach Anspruch 7,
das Messen (141) des jeweiligen elektrischen Parameters ($V_n$) auf dem Beleuchtungssteuerungsbus (5) über den nicht stromführenden Schalter (23) des jeweiligen Buskommunikationsteilnehmers (2) umfassend

   - Messen (1412) des jeweiligen elektrischen Parameters ($V_n$) auf dem Beleuchtungssteuerungsbus (5) als Reaktion auf das Empfangen (1411) der Nachricht, die die eine der Anzahl von M Busleistungsversorgungen (3) auffordert, oder der Nachricht, die den unterschiedlichen der Anzahl von N Buskommunikationsteilnehmern (2) auffordert.

9. Verfahren (1) nach einem der Ansprüche 1 bis 8,
das Abgleichen (15) der jeweils geplanten elektrischen Parameter ($V_{n,p}$-$V_{n,0}$) auf dem Beleuchtungssteuerungsbus (5) mit den jeweils beobachteten elektrischen Parametern ($V_n$-$V_{n,0}$) auf dem Beleuchtungssteuerungsbus (5) umfassend

   - in jedem der hergestellten Leistungsübertragungszustände,
   - Empfangen (151) der jeweiligen beobachteten elektrischen Parameter ($V_n$-$V_{n,0}$) auf dem Beleuchtungssteuerungsbus (5) von einem oder mehreren der Anzahl von N Buskommunikationsteilnehmern (2);
   - Sortieren (152) der jeweils beobachteten elektrischen Parameter ($V_n$-$V_{n,0}$) in absteigender Reihenfolge;
   - Sortieren (153), für jeden der mindestens N unterschiedlichen Leistungsübertragungszustände auf dem Beleuchtungssteuerungsbus (5), der jeweiligen geplanten elektrischen Parameter ($V_{n,p}$-$V_{n,0}$) in absteigender Reihenfolge; und
   - Bestimmen (154) einer besten Übereinstimmung der sortierten beobachteten elektrischen Parameter ($V_n$-$V_{n,0}$) mit den sortierten geplanten elektrischen Parametern ($V_{n,p}$-$V_{n,0}$) der mindestens N unterschiedlichen Leistungsübertragungszustände auf dem Beleuchtungssteuerungsbus (5) gemäß einer Minimierung eines Residuums.

10. Verfahren (1) nach Anspruch 9,
das Bestimmen (154) der besten Übereinstimmung der sortierten beobachteten elektrischen Parameter ($V_n$-$V_{n,0}$) mit den sortierten geplanten elektrischen Parametern ($V_{n,p}$-$V_{n,0}$) der mindestens N unterschiedlichen Leistungsübertragungszustände auf dem Beleuchtungssteuerungsbus (5) gemäß einer Minimierung eines Residuums umfassend

   - Anwenden (1541) eines Verfahrens der kleinsten Quadrate oder eines gleichwertigen Verfahrens der Regressionsanalyse, der Rest umfassend eine Differenz zwischen den sortierten beobachteten elektrischen Parametern ($V_n$-$V_{n,0}$) und den sortierten geplanten elektrischen Parametern ($V_{n,p}$-$V_{n,0}$) des jeweiligen Leistungsübertragungszustands auf dem Beleuchtungssteuerungsbus (5).

11. Verfahren (1) nach einem der Ansprüche 1 bis 10,
wobei der Beleuchtungssteuerungsbus (5) ein DALI-Bus ist.

12. Beleuchtungssystem, umfassend einen Beleuchtungssteuerungsbus (5), eine Anzahl von N Buskommunikationsteilnehmern und eine Beleuchtungsverwaltungseinheit (4), umfassend einen Prozessor, wobei der Prozessor konfiguriert ist zum

- Bestimmen (12), für jeden von einer Anzahl von N Buskommunikationsteilnehmern und für mindestens N unterschiedliche Leistungsübertragungszustände auf dem Beleuchtungssteuerungsbus (5), jeweils geplanter elektrischer Parameter ($V_{n,p}$-$V_{n,0}$) auf dem Beleuchtungssteuerungsbus (5) gemäß einem elektrischen Auslegungsplan des Beleuchtungssteuerungsbusses (5);
- Herstellen (13) der mindestens N unterschiedlichen Leistungsübertragungszustände auf dem Beleuchtungssteuerungsbus (5) durch Kurzschließen (131) in jedem der mindestens N unterschiedlichen hergestellten Leistungsübertragungszustände auf dem Beleuchtungssteuerungsbus (5), wobei der Beleuchtungssteuerungsbus (5) ein unterschiedlicher zu den N Buskommunikationsteilnehmern (2) ist; und
jeder der Anzahl von N Buskommunikationsteilnehmern konfiguriert ist, um in jedem der mindestens N unterschiedlichen hergestellten Leistungsübertragungszustände auf dem Beleuchtungssteuerungsbus einen jeweiligen beobachteten elektrischen Parameter ($V_n$-$V_{n,0}$) auf dem Beleuchtungssteuerungsbus zu erfassen; und der Prozessor konfiguriert ist zum:

- Abgleichen (15), für jeden der mindestens N unterschiedlichen hergestellten Leistungsübertragungszustände auf dem Beleuchtungssteuerungsbus (5), der jeweiligen geplanten elektrischen Parameter ($V_{n,p}$-$V_{n,0}$) auf dem Beleuchtungssteuerungsbus (5) mit den jeweils beobachteten elektrischen Parametern ($V_n$-$V_{n,0}$) auf dem Beleuchtungssteuerungsbus (5).

**Revendications**

1. Procédé (1) de localisation automatique d'un nombre de N participants à la communication de bus (2) d'un bus de commande d'éclairage (5), comprenant

- la détermination (12), pour chacun du nombre de N participants à la communication de bus et pour au moins N différents états de transfert de puissance sur le bus de commande d'éclairage (5), des paramètres électriques planifiés respectifs ($V_{n,p}$-$V_{n,0}$) sur le bus de commande d'éclairage (5) conformément à un plan d'implantation électrique du bus de commande d'éclairage (5) ;
- l'établissement (13) des au moins N différents états de transfert de puissance sur le bus de commande d'éclairage (5) en court-circuitant (131), dans chacun des au moins N différents états de transfert de puissance établis sur le bus de commande d'éclairage (5), le bus de commande d'éclairage (5) par un des N participants à la communication de bus (2) ;
- la détection (14), par chacun du nombre de N participants à la communication de bus dans chacun des au moins N différents états établis de transfert de puissance sur le bus de commande d'éclairage (5), d'un paramètre électrique observé respectif ($V_n$-$V_{n,0}$) sur le bus de commande d'éclairage (5) ; et
- la mise en correspondance (15), pour chacun des au moins N différents états établis de transfert de puissance sur le bus de commande d'éclairage (5), des paramètres électriques planifiés respectifs ($V_{n,p}$-$V_{n,0}$) sur le bus de commande d'éclairage (5) avec les paramètres électriques observés respectifs ($V_n$-$V_{n,0}$) sur le bus de commande d'éclairage (5).

2. Procédé (1) selon la revendication 1,
la détermination (12) des paramètres électriques planifiés respectifs ($V_{n,p}$-$V_{n,0}$) sur le bus de commande d'éclairage (5) conformément au plan d'implantation électrique du bus de commande d'éclairage (5) comprenant

- l'établissement (121) d'un système d'équations de circuits linéaires conformément au plan d'implantation électrique du bus de commande d'éclairage (5) ;
- l'application (122) du système d'équations de circuit linéaire à chacun des au moins N différents états de transfert de puissance sur le bus de commande d'éclairage (5) ; et
- la résolution (123) du système appliqué respectif d'équations de circuit linéaire pour les paramètres électriques planifiés respectifs ($V_{n,p}$-$V_{n,0}$) sur le bus de commande d'éclairage (5).

3. Procédé (1) selon la revendication 2,

l'établissement (121) du système d'équations de circuit linéaire conformément au plan d'implantation électrique du bus de commande d'éclairage (5) comprenant

- l'application (1211) des lois de Kirchhoff sur les circuits au plan d'implantation électrique du bus de commande d'éclairage (5) ; et

la résolution (123) du système appliqué respectif d'équations de circuit linéaire pour les paramètres électriques planifiés respectifs ($V_{n,p}$) sur le bus de commande d'éclairage (5) comprenant

- l'application (1231) de l'élimination gaussienne ou d'une méthode équivalente d'algèbre linéaire au système d'équations linéaires.

4. Procédé (1) selon l'une quelconque des revendications 1 à 3,
le court-circuitage (131) du bus de commande d'éclairage (5) par l'un des N participants à la communication de bus (2), comprenant

- l'envoi (1311) d'un message invitant l'un des N participants à la communication de bus (2) à répondre, la réponse au message entraînant le court-circuitage du bus de commande d'éclairage (5).

5. Procédé (1) selon l'une quelconque des revendications 1 à 4,
l'établissement (13) des au moins N différents états de transfert de puissance sur le bus de commande d'éclairage (5) comprenant

- l'alimentation (132), dans chacun des au moins N différents états établis de transfert d'énergie sur le bus de commande d'éclairage (5), du bus de commande d'éclairage (5) par un d'un nombre de M blocs d'alimentation de bus (3).

6. Procédé (1) selon la revendication 5,
l'alimentation (132) du bus de commande d'éclairage (5) par l'un du nombre de M blocs d'alimentation de bus (3) comprenant

- l'envoi (1321) d'un message invitant l'un du nombre de M blocs d'alimentation de bus (3) à alimenter le bus de commande de l'éclairage (5).

7. Procédé (1) selon l'une quelconque des revendications 1 à 6,
la détection (14) du paramètre électrique observé respectif ($V_n$-$V_{n,0}$) sur le bus de commande d'éclairage (5), comprenant

- la mesure (141) du paramètre électrique respectif ($V_n$) sur le bus de commande d'éclairage (5) sur l'ensemble d'un commutateur non porteur de courant (23) du participant de communication de bus respectif (2) ; et
- l'envoi (142) du paramètre électrique observé ($V_n$) sur le bus de commande d'éclairage (5) moins un paramètre électrique au repos ($V_{n,0}$) sur le bus de commande d'éclairage (5) à une entité de gestion d'éclairage (4) du bus de commande d'éclairage (5).

8. Procédé (1) selon la revendication 7,
la mesure (141) du paramètre électrique respectif ($V_n$) sur le bus de commande d'éclairage (5) sur l'ensemble du commutateur non porteur de courant (23) du participant de communication de bus respectif (2) comprenant

- la mesure (1412) du paramètre électrique respectif ($V_n$) sur le bus de commande d'éclairage (5) en réponse à la réception (1411) du message invitant l'un du nombre de M blocs d'alimentation de bus (3) ou du message invitant l'un du nombre de N participants à la communication de bus (2).

9. Procédé (1) selon l'une quelconque des revendications 1 à 8,
la mise en correspondance (15) des paramètres électriques planifiés respectifs ($V_{n,p}$-$V_{n,0}$) sur le bus de commande d'éclairage (5) avec les paramètres électriques observés respectifs ($V_n$-$V_{n,0}$) sur le bus de commande d'éclairage (5) comprenant

- dans chacun des états établis de transfert de puissance,
- la réception (151) des paramètres électriques observés respectifs ($V_n$-$V_{n,0}$) sur le bus de commande d'éclairage (5) de la part d'un ou plusieurs du nombre de N participants à la communication de bus (2) ;
- le tri (152) des paramètres électriques observés respectifs ($V_n$-$V_{n,0}$) dans l'ordre décroissant ;
- le tri (153), pour chacun des au moins N différents états de transfert de puissance sur le bus de commande d'éclairage (5), des paramètres électriques planifiés respectifs ($V_{n,p}$-$V_{n,0}$) dans l'ordre décroissant ; et
- la détermination (154) d'une meilleure adéquation entre les paramètres électriques observés triés ($V_n$-$V_{n,0}$) et les paramètres électriques planifiés triés ($V_{n,p}$-$V_{n,0}$) des au moins N différents états de transfert de puissance sur le bus de commande d'éclairage (5) selon une réduction au minimum d'un résidu.

10. Procédé (1) selon la revendication 9,
la détermination (154) de la meilleure adéquation entre les paramètres électriques observés triés ($V_n$-$V_{n,0}$) et les paramètres électriques planifiés triés ($V_{n,p}$-$V_{n,0}$) des au moins N différents états de transfert de puissance sur le bus de commande d'éclairage (5) selon une réduction au minimum d'un résidu comprenant

- l'application (1541) d'une méthode des moindres carrés ou d'une méthode équivalente d'analyse de régression, le résidu comprenant une différence entre les paramètres électriques observés triés ($V_n$-$V_{n,0}$) et les paramètres électriques planifiés triés ($V_{n,p}$-$V_{n,0}$) de l'état respectif du transfert de puissance sur le bus de commande d'éclairage (5).

11. Procédé (1) selon l'une quelconque des revendications 1 à 10,
le bus de commande d'éclairage (5) comprend un bus DALI.

12. Système d'éclairage comprenant un bus de commande d'éclairage (5), un nombre de N participants à la communication de bus, et une entité de gestion d'éclairage (4) comprenant un processeur, le processeur est configuré pour

- la détermination (12), pour chacun d'un nombre de N participants à la communication de bus et pour au moins N différents états de transfert de puissance sur le bus de commande d'éclairage (5), des paramètres électriques planifiés respectifs ($V_{n,p}$-$V_{n,0}$) sur le bus de commande d'éclairage (5) conformément à un plan d'implantation électrique du bus de commande d'éclairage (5) ;
- l'établissement (13) des au moins N différents états de transfert de puissance sur le bus de commande d'éclairage (5) en court-circuitant (131), dans chacun des au moins N différents états de transfert de puissance établis sur le bus de commande d'éclairage (5), le bus de commande d'éclairage (5) par un des N participants à la communication de bus (2) ; et
chacun du nombre de N participants à la communication de bus configurée pour détecter dans chacun des au moins N différents états établis de transfert de puissance sur le bus de commande d'éclairage, un paramètre électrique observé respectif ($V_n$-$V_{n,0}$) sur le bus de commande d'éclairage ; et le processeur est en outre configuré pour :

- mettre en correspondance (15), pour chacun des au moins N différents états établis de transfert de puissance sur le bus de commande d'éclairage (5), les paramètres électriques planifiés respectifs ($V_{n,p}$-$V_{n,0}$) sur le bus de commande d'éclairage (5) avec les paramètres électriques observés respectifs détectés ($V_n$-$V_{n,0}$) sur le bus de commande d'éclairage (5).

Fig. 1

Fig. 2

Fig. 3

Fig. 4

Fig. 5

Fig. 6

**EP 4 161 218 B1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2004002792 A1